# EUROPEAN PATENT APPLICATION

(11) **EP 2 109 087 A2**
(43) Date of publication of application: **14.10.2009**
(21) Application number: 09156048.2
(22) Date of filing: 24.03.2009
(51) Int. Cl.: G08G 5/00

(54) **Method for accessing air traffic control communications**

(30) Priority: 09.04.2008 US 100283
(71) Applicant: Honeywell International Inc., Morristown, NJ 07962 (US)
(72) Inventor: MCGUFFIN, Thomas F., Morristown, NJ 07962-2245 (US)
(74) Representative: Buckley, Guy Julian

(57) **Abstract**

A method for accessing datalink communications for an aircraft is provided. The method comprises providing a pre-selected datafink service provider for aircraft communications, detecting a datalink service provider supplying air traffic control (ATC) communication services, and determining whether the detected datalink service provider is the same as the pre-selected datalink service provider. If the detected datalink service provider is not the same as the pre-selected datalink service provider, a communication link is established with the detected datalink service provider for ATC messages, while a communication link is maintained with the pre-selected datalink service provider for non-ATC messages. If the detected datalink service provider is the same as the pre-selected datalink service provider, a communication link is maintained with the pre-selected datalink service provider for both ATC messages and non-ATC messages.

## Description

### BACKGROUND

Air traffic control (ATC) centers are used at most airports to coordinate take-offs, landings, and general aircraft traffic around the airport. Traditionally, a pilot uses a radio for voice communications with an ATC center to request permission or to receive instructions therefrom. With increasing air traffic it has become difficult for ATC centers to process all of the voice communications from aircraft. Consequently, datalink applications have been developed to provide textual communication between pilots and air traffic controllers.

One of these datalink applications, called Controller Pilot Data Link Communication (CPDLC), provides for the direct exchange of text-based messages between a controller and a pilot. The CPDLC enables the pilot to communicate electronically with an ATC center by guiding the pilot through a series of screen configurations or displays that either elicit flight information from the pilot or notify the pilot regarding flight information. The CPDLC may be part of a larger flight information/control program or may serve as a stand-alone program.

The volume of datalink messages is expected to increase significantly in the near future, which could mean a significant increase in recurring datalink charges to airlines from network service providers. As airlines are very sensitive to operating costs, this cost increase is of great concern.

An airline usually has a contract with only one service provider for all aircraft communications. If an aircraft uses a different service provider for non-ATC messages, then the service cost is usually significantly higher. If an airline has contracts with two or more service providers, then the airline usually gets a much better price from the service provider that provides most of the service. ATC communication services are typically provided for free to airlines not under contract with a service provider (e.g., private aircraft companies).

An airline typically configures the avionics software in its aircraft to use the service provider that provides the lowest rates for the non-ATC messages. The avionics software is also typically configured to use the same service provider for both ATC messages and non-ATC messages.

In Europe, each ATC control sector typically contracts with one datalink service provider for messaging services. An airline that uses the same datalink service provider as the datalink service provider under contract to the ATC center is not charged for the ATC messages. The airline is always charged for non-ATC messages. An airline that uses a different datalink service provider than the datalink service provider under contract to the ATC center is charged for both the ATC messages and non-ATC messages.

Accordingly, there is a need for addressing the problem of how an airline can control and minimize the potentially significant cost increase due to the use of ATC datalink for ATC messages and non-ATC messages.

### SUMMARY

The present invention relates to a method for accessing datalink communications for an aircraft. The method comprises providing a pre-selected datalink service provider for aircraft communications, detecting a datalink service provider supplying air traffic control (ATC) communication services, and determining whether the detected datalink service provider is the same as the pre-selected datalink service provider. If the detected datalink service provider is not the same as the pre-selected datalink service provider, a communication link is established with the detected datalink service provider for ATC messages, while a communication link is maintained with the pre-selected datalink service provider for non-ATC messages. If the detected datalink service provider is the same as the pre-selected datalink service provider, a communication link is maintained with the pre-selected datalink service provider for both ATC messages and non-ATC messages.

### BRIEF DESCRIPTION OF THE DRAWINGS

Features of the present invention will become apparent to those skilled in the art from the following description with reference to the drawings. Understanding that the drawings depict only typical embodiments of the invention and are not therefore to be considered limiting in scope, the invention will be described with additional specificity and detail through the use of the accompanying drawings, in which:

Figure 1 is a flow diagram representing a method for accessing free or reduced cost air traffic control (ATC) datalink communications according to the invention; and

Figure 2 is a schematic diagram illustrating an exemplary ATC sector and service provider area configuration in which the method of Figure 1 can be employed.

### DETAILED DESCRIPTION

In the following detailed description, embodiments are described in sufficient detail to enable those skilled in the art to practice the invention. It is to be understood that other embodiments may be utilized without departing from the scope of the present invention. The following detailed description is, therefore, not to be taken in a limiting sense.

The present invention is directed to a method for accessing free or reduced cost air traffic control datalink communications, such as a Controller Pilot Data Link Communication (CPDLC) message. The present method can be used to maintain simultaneous connections with multiple datalink service providers. In particular, the method can be used to track and establish communication links as needed to maintain a connection with a service provider supplying free or reduced cost air traffic control (ATC) datalink communication services, while maintaining a separate link to a pre-selected service provider. The present method is able to deal with ATC and non-ATC messages on both links simultaneously.

Both ATC datalink and non-ATC datalink services use VHF radios and a protocol called VDL (VHF datalink) mode 2. All service providers must establish a presence on a VHF channel called the common signaling channel (CSC). Selecting a service provider over VDL mode 2 has an associated cost. The present method allows for the simultaneous connection to ATC service providers, and different non-ATC service providers such as Aeronautical Operations Center (AOC) service providers, which provides for reduced usage costs.

In general, the present method is employed to establish a communication link with a pre-selected service provider for non-ATC (e.g., AOC) messages, and simultaneously establish a communication link for ATC messages with a service provider that is providing free or reduced cost ATC communication services in a particular ATC sector where an aircraft is flying. When the aircraft transits from one ATC sector to a new ATC sector, the present method determines which service provider is supplying free or reduced cost ATC datalink communications in the new sector. If a different service provider is supplying free or reduced cost ATC datalink communications, then a link is established with the different service provider for ATC datalink communications. The non-ATC datalink communications can be managed independently based on the airline's preferences.

The present method can be implemented in an aircraft by modifying conventional avionics software to add appropriate program logic code to accomplish the method. For example, the present method can be implemented as part of the avionics software in a communication management function (CMF) of an integrated avionics system, a communication management unit (CMU) in an aircraft, or in any other avionics computer in an aircraft that manages the air-ground data communications.

Such avionics computers are examples of special purpose computers that can store and execute avionics software, including instructions for accessing datalink communications for an aircraft. The present method can also be implemented as part of the communication protocols for future air navigation system (FANS) CPDLC systems, or aeronautical telecommunication network (ATN) CPDLC systems.

In one implementation, avionics software in the CMU of an aircraft is modified, such as the VDL mode 2 software, in order to establish and maintain links with two service providers simultaneously. The avionics software in the CMU is modified to process data in the VDL mode 2 ground station information frame (GSIF) uplinks to identify which service provider has a contract with the ATC center to provide ATC communications services. The CMU software uses this information to manage the VDL mode 2 links so that there is always a link to the service provider supplying ATC support.

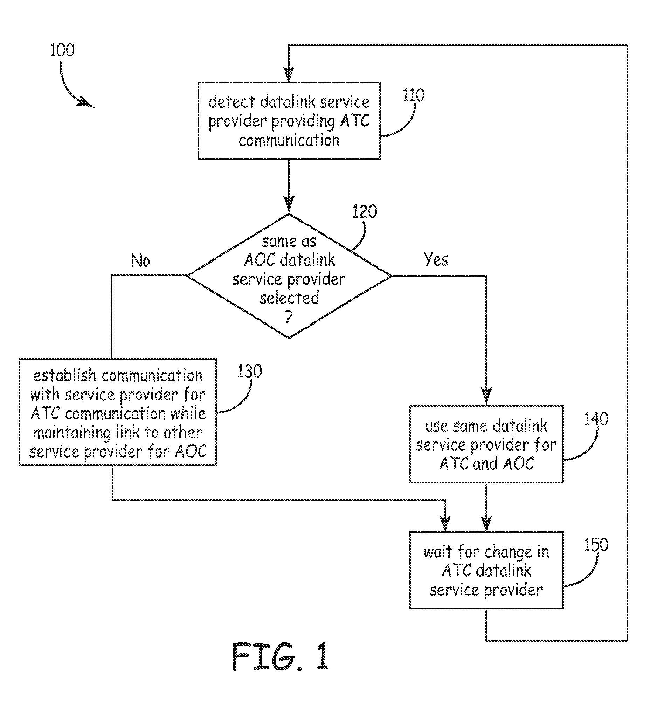

Figure 1 is a flow diagram representing a method 100 for accessing free or reduced cost ATC datalink communications according to the invention. As an aircraft is traveling through a particular ATC sector, the avionics software in the aircraft detects the datalink service provider that is providing ATC communications in that sector (block 110). The avionics software then determines whether the detected datalink service provider is the same as a pre-selected AOC (non-ATC) datalink service provider (block 120). If not the same, a communication link is established with the detected datalink service provider for ATC communications, while maintaining a link to the other pre-selected service provider for AOC messages (block 130). If the detected datalink service provider is the same as the pre-selected service provider, then this same service provider is used for both ATC messages and AOC messages (block 140). Thereafter, the avionics software waits for a change in the ATC datalink service provider (block 150). The above steps are repeated when a change is detected regarding which datalink service provider, by monitoring the GSIF data, is providing free or reduced cost ATC communications.

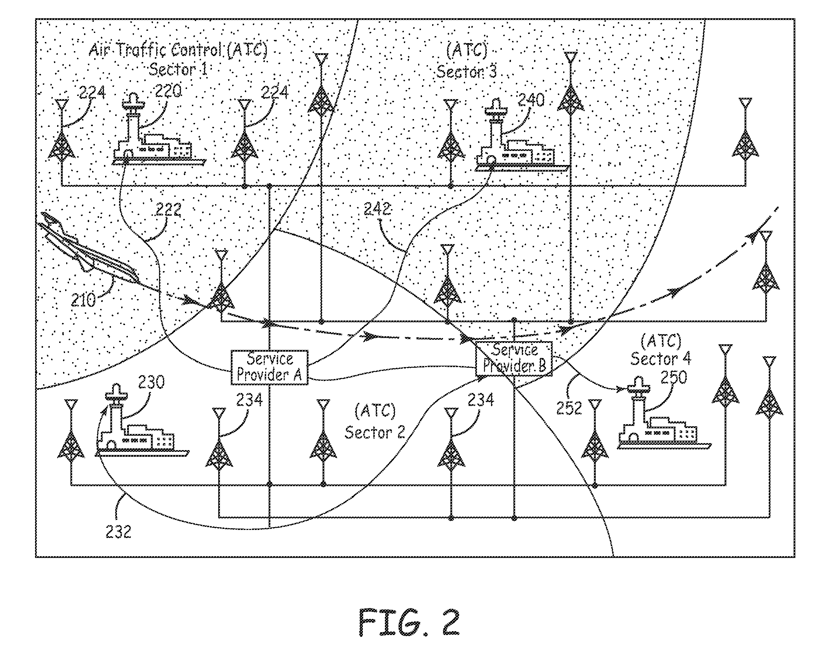

Figure 2 is a schematic diagram illustrating an exemplary ATC sector and service provider configuration in which the present method can be employed to access free or reduced cost ATC datalink communications. The method is implemented in avionic software run by a computer onboard an aircraft 210. The aircraft 210 flies through an ATC sector 1 having an ATC center 220. A datalink service provider A supplies free or reduced cost ATC communication services, represented as a datalink 222 connecting service provider A with ATC center 220. The datalink service provider A also maintains a network of antennas 224 in sector 1.

As aircraft 210 flies through sector 1, the avionics software detects that service provider A is supplying ATC communication services in sector 1. The avionics software then determines if service provider A is the same as a pre-selected non-ATC datalink service provider for aircraft 210. If not the same, the avionics software establishes a communication link with service provider A for ATC datalink communications, while maintaining a link to the non-ATC datalink service provider for non-ATC messages. If service provider A is the same as the non-ATC datalink service provider, then service provider A is used for both ATC and non-ATC messages.

When aircraft 210 transits from ATC sector 1 to ATC sector 2, the avionics software detects that a new service provider B is supplying ATC communication services in sector 2. As shown in Figure 2, sector 2 has an ATC center 230, and a datalink service provider B that supplies free or reduced cost ATC communication services, represented as a datalink 232 connecting service provider B with ATC center 230. The datalink service provider B also maintains a network of antennas 234 in sector 2. The avionics software determines if service provider B is the same as the pre-selected non-ATC datalink service provider for aircraft 210. If not the same, a communication link is established with service provider B for ATC datalink, while maintaining a link to the non-ATC datalink service provider. If service provider B is the same as the non-ATC datalink service provider, then service provider B is used for both ATC and non-ATC messages.

Similarly, when aircraft 210 transits from sector 2 to sector 3, the avionics software detects that service provider A is supplying ATC communication services in sector 3. As depicted in Figure 2, sector 3 has an ATC center 240, with service provider A supplying free or reduced cost ATC communication services, represented as a datalink 242 connecting service provider A with ATC center 240. The avionics software determines if service provider A is the same as the non-ATC datalink service provider for aircraft 210. If not the same, a communication link is established with service provider A for ATC datalink, while maintaining a link to the non-ATC datalink service provider. If service provider A is the same as the non-ATC datalink service provider, then service provider A is used for both ATC and non-ATC messages.

Likewise, when aircraft 210 transits from sector 3 to sector 4, the avionics software detects that service provider B is supplying ATC communication services in sector 4. As shown in Figure 2, sector 4 has an ATC center 250, with service provider B supplying free or reduced cost ATC communication services, represented as a datalink 252 connecting service provider B with ATC center 250. The avionics software determines if service provider B is the same as the non-ATC datalink service provider for aircraft 210. If not the same, the avionics software establishes a communication link with service provider B for ATC datalink, while maintaining a link to the non-ATC datalink service provider. If service provider B is the same as the non-ATC datalink service provider, then service provider B is used for both ATC and non-ATC messages.

It will be understood by those skilled in the art that the present method can be utilized in a variety of other ATC sector and service provider configurations, and is not limited by the configuration shown in Figure 2.

Instructions for carrying out the various process tasks, calculations, and generation of signals and other data used in the method of the invention can be implemented in a computer program product including software, firmware, or other computer readable instructions. These instructions are typically stored on any appropriate computer readable medium used for storage of computer readable instructions or data structures. Such computer readable media can be any available media that can be accessed by a general purpose or special purpose computer or processor, or any programmable logic device.

Suitable computer readable media may comprise, for example, non-volatile memory devices including semiconductor memory devices such as EPROM, EEPROM, or flash memory devices; magnetic disks such as internal hard disks or removable disks; magneto-optical disks; CDs, DVDs, or other optical storage disks; nonvolatile ROM, RAM, and other like media; or any other media that can be used to carry or store desired program code in the form of computer executable instructions or data structures. Any of the foregoing may be supplemented by, or incorporated in, specially-designed application-specific integrated circuits (ASICs). When information is transferred or provided over a network or another communications connection (either hardwired, wireless, or a combination of hardwired or wireless) to a computer, the computer properly views the connection as a computer readable medium. Thus, any such connection is properly termed a computer readable medium. Combinations of the above are also included within the scope of computer readable media.

The method of the invention can be implemented in computer readable instructions, such as program modules or applications, which are executed by a data processor. Generally, program modules or applications include routines, programs, objects, data components, data structures, algorithms, and the like, which perform particular tasks or implement particular abstract data types. These represent examples of program code means for executing steps of the methods disclosed herein. The particular sequence of such executable instructions or associated data structures represent examples of corresponding acts for implementing the functions described in such steps.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A method for accessing datalink communications for an aircraft, the method comprising:
(a) providing a pre-selected datalink service provider for aircraft communications;
(b) detecting a datalink service provider supplying air traffic control (ATC) communication services;
(c) determining whether the detected datalink service provider is the same as the pre-selected datalink service provider;
(d) if the detected datalink service provider is not the same as the pre-selected datalink service provider, establishing a communication link with the detected datalink service provider for ATC messages, while maintaining a communication link with the pre-selected datalink service provider for non-ATC messages; and
(e) if the detected datalink service provider is the same as the pre-selected datalink service provider, maintaining a communication link with the pre-selected datalink service provider for both ATC messages and non-ATC messages.

2. The method of claim 1, wherein the method is implemented as part of communication protocols for an avionics software module.

3. The method of claim 1, wherein the method is implemented as part of communication protocols for a future air navigation controller pilot data link communication (CPDLC) system.

4. The method of claim 1, wherein the method is implemented as part of communication protocols for an aeronautical telecommunication network CPDLC system.

5. The method of claim 1, further comprising waiting for a change in the datalink service provider for the aircraft following steps (d) or (e).

6. The method of claim 5, further comprising repeating steps (c) to (e) when a new datalink service provider is detected that provides ATC communication services.

7. A computer program product, comprising:
a computer readable medium having instructions stored thereon for a method of accessing datalink communications for an aircraft according to claim 1.

8. A computer comprising:
a computer readable medium having instructions stored thereon for a method of accessing datalink communications for an aircraft according to claim 1.

9. The computer of claim 8, wherein the computer comprises a communication management unit, or a communication management function in an integrated avionics system.

10. The computer of claim 8, wherein the computer is onboard an aircraft.
